# EUROPEAN PATENT SPECIFICATION

(11) **EP 0 577 418 B1**
(45) Date of publication and mention of the grant of the patent: **30.12.1998**
(21) Application number: 93305146.8
(22) Date of filing: 30.06.1993
(51) Int. Cl.: H04N 7/32

(54) **Apparatus for motion compensation coding of digital video signal**
Vorrichtung zur Kodierung von digitalen Bildsignalen mit Bewegungskompensation
Appareil pour codage avec compensation de mouvement de signaux vidéo digitaux

(30) Priority: 03.07.1992 JP 176604/92
(43) Date of publication of application: 05.01.1994
(73) Proprietor: MATSUSHITA ELECTRIC INDUSTRIAL CO., LTD., Kadoma-shi, Osaka-fu 571 (JP)
(72) Inventor: Seng, Boon Choong, Moriguchi-chi, Osaka-fu 570 (JP); Akiyama, Toshihide, Takatsuki-shi, Osaka-fu 569 (JP); Takahashi, Kenichi, Kudaru, Kamigyo-ku, Kyoto-shi, Kyoto-fu (JP)
(74) Representative: Crawford, Andrew Birkby

(56) References cited:
- EP-A- 0 447 068
- EP-A- 0 484 140
- EP-A- 0 493 136
- WO-A-92/10061
- SIGNAL PROCESSING. IMAGE COMMUNICATION, vol.4, no.2, April 1992, AMSTERDAM NL pages 129 - 140, XP000273159 LE GALL 'The MPEG video compression algorithm'

## Description

### BACKGROUND OF THE INVENTION

### 1. Field of the Invention

The present invention relates to an encoding apparatus for compression and coding of digital video signals for transmission and storage in a compressed form, and more particularly to an encoding apparatus which performs the compression and coding with motion compensation.

### 2. Description of the Prior Art

Numerous picture bit rate reduction coding schemes are known for compressing digitized video signals so as to enable the transmission on a transmission channel or storage in a storage medium of the video signals at a reduced bit rate. Activities for the standardization of compression and coding of digital video signals have been progressed. For example, H. 261 for video conferencing and MPEG-1 for digital storage media were developed by CCITT and ISO respectively. Others are still under development, for example MPEG-2 which is aimed for generic coding purposes.

The most widely used algorithm adopts block-based motion compensation to reduce the temporal redundancy. A current picture is divided into a plurality of blocks each containing a matrix of pixel data. For each block, motion vector is detected by comparing the current block with possible blocks in a reference picture to find a best-matched prediction among the possible blocks in the reference picture. A widely used criterion for estimating an optimum motion vector is by minimizing the sum of the square error or absolute error between the reference block and the current block. The reference picture could be an original picture or a compressed and subsequently decompressed picture in the past or future in the display order. Reference made to a picture in the past will hereafter be referred to as "forward prediction", and a motion vector detected with reference to a past picture will be referred to as "forward motion vector". Reference made to a picture in the future will hereafter be referred to as "backward prediction", and a motion vector detected with reference to a future picture will be referred to as "backward motion vector". Motion compensation is then performed where a prediction block is retrieved, responsive to the detected motion vector, from the corresponding picture which has been compressed and subsequently decompressed. The difference between the predicted block and the current block, i.e. the "prediction error", is further compressed using frequency transformation to remove spatial correlation. The transformed data are quantized in an irreversible process to discard the less important information. Finally, the motion vectors are combined with the quantized data and other side information for transmission or storage using fixed or variable length codes.

For high compression efficiency, three main picture types are defined. An intra picture (I-picture) is a picture coded without reference to other pictures. A predicted picture (P-picture) is a picture coded using the motion compensated prediction from a past I-picture or P-picture. A bidirectionally-predicted picture (B-picture) is a picture coded by referring to both past and future reference pictures for motion compensation. The choice of motion compensation is a result of trade-off between the coding gain provided by using the motion information and the overhead needed to transmit or store the information. In an I-picture, there is only the intra-coded mode. In a P-picture, the intra-ceded and forward-prediction-coded modes are permitted. And in a B-picture, the intra-coded, forward-prediction-coded, backward-prediction-coded, and bidirectionally-prediction-coded modes are permitted. The bidirectional prediction is the average of the forward and backward motion compensated blocks. The averaged block will hereafter be referred to as "interpolated block".

For interlaced pictures which are processed by merging two fields, there are additional modes for switching between the frame motion compensation and field motion compensation. In the frame motion compensation, a block of pixel data is predicted in response to a motion vector. While in the field motion compensation, a block of pixel data is predicted in response to two motion vectors each corresponding to one of the two fields in the block. Hence, in a B-picture for example, the intra-coded, frame forward-prediction-coded, field forward-prediction-coded, frame backward-prediction-coded, field backward-prediction-coded, and bidirectionally-prediction-coded modes are possible.

A prescribed cost function is used to determine an optimum mode in the sense that the prediction error is the least. The prediction error can be evaluated by taking the sum of the square error or absolute error between the predicted block and the current block. The activity of the current block is also estimated by, for example, the AC energy or the square root of the AC energy of the current block. All these values are then compared for determining the optimum mode based on which the current block is encoded. Depending on the mode of the block, the motion vector information and other side information are transmitted or stored with the compressed prediction error signal.

For motion compensation, both the encoder apparatus and decoder apparatus use the decompressed pictures as references. This prevents mismatching between the encoder apparatus and decoder apparatus. Hence, theoretically and conventionally, the mode selection also refers to the decompressed pictures, as the prediction errors of the motion compensated block of the original picture and the decompressed picture are different due to quantization noises. Therefore, the optimum mode to be determined is based on the decompressed pictures to ensure that the actual signals transmitted or stored consume the least number of bits.

For motion estimation, on the other hand, the original pictures or decompressed pictures could be used. Use of the decompressed pictures by the encoder gives the smallest prediction error, whereas use of the original pictures gives the most accurate motion vectors. The choice depends on whether the artifacts of increased noises or greater spurious motion are judged to be more objectionable. From the hardware point of view, however, it is preferred to use the original pictures as the motion estimation process is very demanding and has very high computational load.

There are a number of prior proposals for encoding apparatus for motion compensated coding of digital signals e.g. EP-A-0 484 140, WO-A-92/10061 and EP-A-0 447 068 which disclose motion detecting means for motion detection in a current block and a mode selection means for determining the optimum encoding mode for encoding the current block. In each case, the outputs of the detection means are motion vectors since the detecting means are motion vector detecting circuits.

A system which refers to the original pictures for motion estimation and to the decompressed pictures for mode selection demands high speed accessible memories and redundant computation circuits. The encoder has to access the frame memories which store the decompressed past and future pictures to retrieve the prediction signals for mode selection. The number of times for accessing the memories is proportional to the number of motion vectors and the number of modes. In addition, the access and other processing are to be completed within a unit time for encoding each block. Also, additional circuits, besides those in the motion estimator, for evaluating the prediction errors are necessary for calculating the sum of the square error or absolute error between the current block and predicted block. These additional circuits can be regarded as redundant.

### SUMMARY OF THE INVENTION

The present invention provides an encoding apparatus for motion compensated coding of
digital video signals, comprising:
storage means for storing each input video frame and for dividing the input video frame into a plurality of blocks each containing a matrix of pixel data;
motion detection means coupled to said storage means for detecting a motion of a current block of a current frame by comparing said current block with each reference block in each of a plurality of reference frames based on a prescribed cost function for measuring a prediction error of said reference block, and for outputting for each of said reference frames an optimum motion vector corresponding to a best-matched reference block;
mode selection means for determining an optimum encoding mode from a plurality of encoding modes for encoding said current block; and
encoding means coupled to said storage means, said motion detection means and said mode selection means for compression coding said current block based on said optimum encoding mode and said optimum motion vector corresponding to said optimum encoding mode to obtain a coded data,
characterized in that said motion detection means outputs for each of said reference frames said optimum motion vector and an optimum value of said cost function corresponding to the best-matched reference block, and
that said mode selection means is coupled to said storage means and said motion detection means for determining said optimum encoding mode from said plurality of encoding modes based on said optimum values of said cost function received from said motion detection means and an activity of said current block, said mode selection means including activity estimation means for estimating the activity of said current block.

A preferred form of encoding apparatus performs motion accessing memories and hence allows the use of memories with moderate accessing speed.

An advantage of this encoding apparatus is that redundant circuits are discarded and hence the computation of the prediction error for mode selection is reduced.

In a preferred manner, the motion detection means produces an optimum forward motion vector and an optimum value of cost function corresponding to a best-matched reference block from a past picture, and at the same time, an optimum backward motion vector and an optimum value of cost function corresponding to a best-matched reference block from a future picture. The encoding means retrieves past and future blocks of pixel data in response to the optimum forward and backward motion vectors, respectively, from the corresponding pictures which have been compressed and subsequently decompressed in the encoding means. The past and future blocks are averaged to produce an interpolated prediction block. The mode selection means evaluates the interpolated prediction block based on the same prescribed cost function, estimates the activity of the current block and finally determines an optimum mode which gives the least value from all the values of cost function including the activity of the current block.

In another preferred embodiment of the invention, an encoding apparatus for motion compensated coding of digital video signals comprises storage means, motion detection means, and encoding means. The storage means stores each input video picture and divides it into a plurality of blocks each containing a matrix of pixel data. The motion detection means detects a motion of each block of a current picture by comparing a current block with each reference block in a reference picture, which may be a past or future picture, based on a prescribed cost function. For each reference picture, an optimum motion vector and an optimum value of the cost function are produced, corresponding to a best-matched reference block. In a preferred manner, the sum of the square error or absolute error is used as the cost function. Finally, an optimum mode is determined from a plurality of modes based on the optimum values of cost function and an activity of the current block which is detected by an activity estimation means included in the motion detection means. The encoding means then performs compression coding of the current block based on the optimum mode and the corresponding optimum motion vector.

In a preferred manner, the motion detection means includes a first search means for producing an optimum forward motion vector and an optimum value of cost function corresponding to a best-matched reference block from a past picture, and a second search means for producing an optimum backward motion vector and an optimum value of cost function corresponding to a best-matched reference block from a future picture. The motion detection means may further include an interpolation means for averaging the best-matched reference blocks from the past and future pictures to produce an interpolated prediction block. The interpolated prediction block is evaluated based on the same prescribed cost function. Finally, an optimum mode is determined which gives the least value from all the values of cost function including the activity of the current block.

In another preferred manner, the motion detection means further includes a control means for controlling the output of the forward and backward motion vectors based on the optimum mode.

The features and advantages of the invention would be gathered from the following non-limitative, illustrative description made with reference to the attached drawings.

### BRIEF DESCRIPTION OF THE DRAWINGS

FIG. 1 is a block diagram of an embodiment of an encoding apparatus in accordance with the present invention.

FIG. 2 is a block diagram of the motion detector illustrated in FIG. 1.

FIG. 3 is a block diagram of the mode selector illustrated in FIG. 1.

FIG. 4 is a block diagram of another embodiment of an encoding apparatus in accordance with the present invention.

FIG. 5 is a block diagram of the motion detector illustrated in FIG. 4.

### DESCRIPTION OF THE PREFERRED EMBODIMENTS

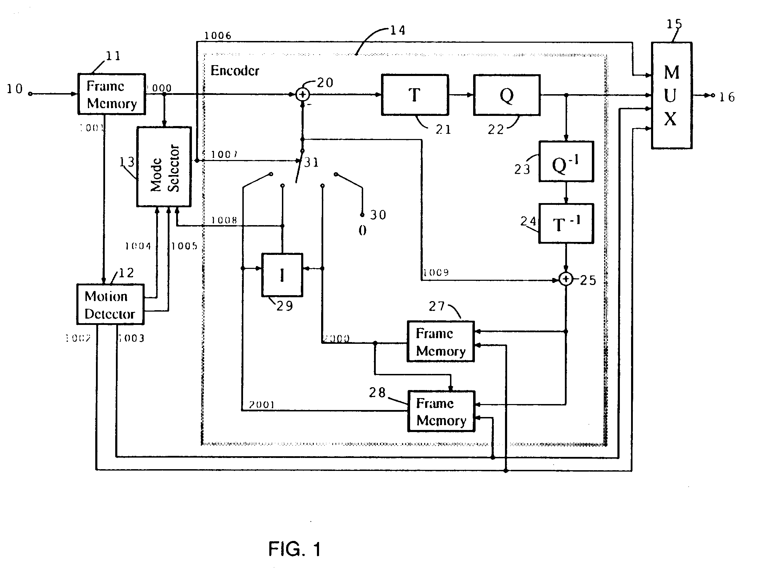

FIG. 1 shows a block diagram of an encoding apparatus for motion compensation coding of digital video signals as an embodiment according to the present invention.

Digital video signal, represented as luminance and two color difference signals (Y, Cb and Cr), is inputted at a port 10. Although not shown in the figure, this may be followed by preprocessing and format conversion to select an appropriate window, resolution and input format. In some standards, the color difference signals (Cb and Cr) are subsampled with respect to the luminance by 2:1 in both horizontal and vertical directions.

A frame memory 11 stores and divides the video signal of each input frame into a plurality of blocks each containing a matrix of pixel data. Each block is of size N × M pixels, in which N and M are integers. In the present embodiment, the luminance signal is divided into blocks of 16 × 16 pixels. The corresponding color difference signals Cb and Cr are divided into blocks of 8 × 8 or 16 × 8 or 16 × 16 according to the color format. Those skilled in the art use the luminance signal for motion estimation and mode selection. The description hereafter, therefore, will be focused on the luminance signal. However, similar extension is applicable to systems which include the color difference signals for motion estimation and mode selection.

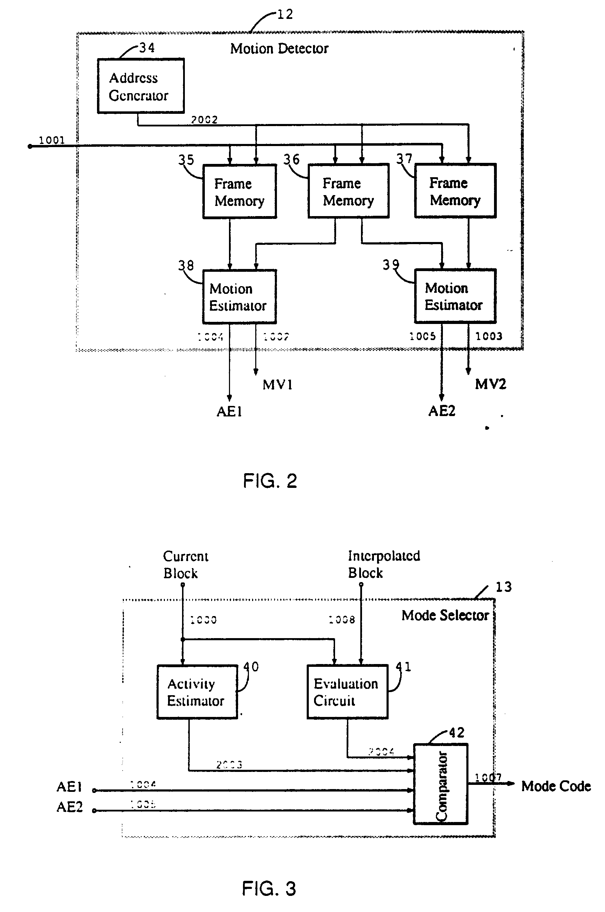

A motion detector 12 receives the input video signal from the frame memory 11 via a line 1001. A block diagram of a preferred example of the motion detector 12 is depicted in FIG. 2. The video signals in successive frames inputted to the motion detector 12 are stored in frame memories 35, 36 and 37. In the present embodiment, the current picture (frame) is stored in the frame memory 36, and the past and future reference pictures (frames), both original, are stored in the frame memories 35 and 37, respectively. An address generator 34 generates the address for retrieving the blocks for motion estimation from the frame memories 35 - 37. The blocks retrieved from the frame memories 35 and 36, for example, are compared in a motion estimator 38, where the sums of the square errors or absolute errors of the two blocks are calculated. Another reference block is next retrieved from the frame memory 35 and compared in the same manner. The process continues over a range of possible blocks retrieved from the frame memory 35. In the present embodiment, the possible reference blocks are located at positions around the location of the current block. The error which gives a minimum value among all the candidates provides an optimum motion vector. The minimum error (AE1) and optimum motion vector (MV1) will hereafter be referred to as "minimum forward error" and "optimum forward motion vector", respectively. Likewise, the minimum error (AE2) and optimum motion vector (MV2), referred to as "minimum backward error" and "optimum backward motion vector", respectively, are obtained by comparing the blocks from the frame memory 36 and the frame memory 37 in a motion estimator 39. The minimum forward and backward errors are outputted through lines 1004 and 1005, respectively, while the optimum motion vectors are output through lines 1002 and 1003, respectively.

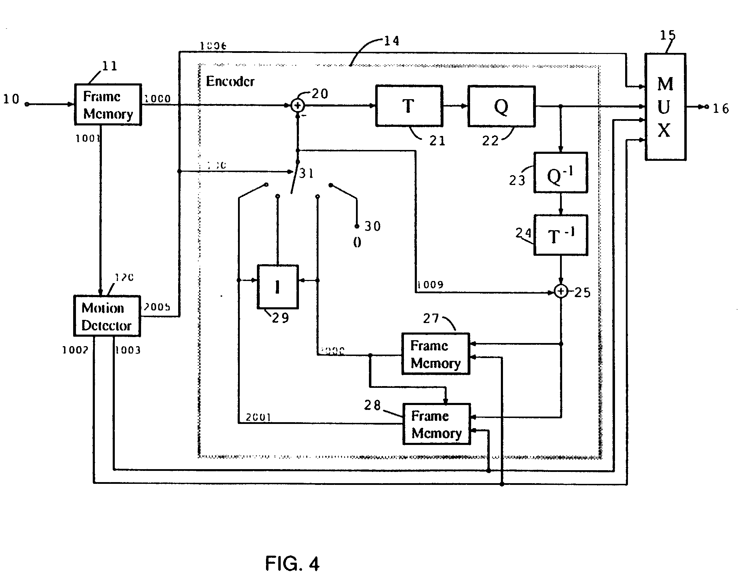

Referring back to FIG. 1, a mode selector 13 determines an optimum mode, based on which the current block will be encoded. A block diagram of a preferred example of the mode selector is shown in FIG. 3. The minimum forward and backward errors (AE1, AE2) are inputted via lines 1004 and 1005, respectively, the current block data is inputted via a line 1000, and an interpolated block is inputted via a line 1008. An evaluation circuit 41 compares the interpolated block with the current block based on the same cost function used in the motion detector 12. In a preferred manner, the sum of the square errors or absolute errors could be employed. Hereafter, this error will be referred to as "interpolation error". An activity estimator 40 estimates the activity of the current block by evaluating the AC energy or its square root. In a preferred manner, all the values including the activity and minimum errors should have the same dimension. For example, a square error and an AC energy are of the same dimension, while an absolute error and a square root of AC energy are of the same dimension. A comparator 42 compares the minimum forward error, minimum backward error, interpolation error and the activity of the current block, and determines an optimum mode corresponding to a minimum value among all the errors including the activity. The comparator 42 generates a mode code indicating the determined optimum mode and output the mode code on a line 1007. The above description explains the case of frame motion compensation. In a variant, where the block is processed as two merged fields, additional modes corresponding to the forward and backward field motion compensation and interpolation are possible.

An encoder 14 encodes the current block based on the optimum mode determined at the mode selector 13. A preferred example of the encoder is shown in FIG. 1. A subtractor 20 receives at one input thereof the current block via a line 1000. The other input of the subtractor 20 is connected to a switch 31 which is controlled by the mode code received via the line 1007. When the switch 31 is connected to a port 30, the subtractor 20 receives an all zero block, corresponding to the intra-coded mode. Connection of the switch 31 to an interpolator (I) 29 corresponds to the interpolation mode. The interpolator 29 averages the forward and backward reference blocks retrieved from decompressed past and future pictures. Connection of the switch 31 to a line 2000 corresponds to the backward prediction mode. Connection of the switch 31 to a line 2001 corresponds to the forward prediction mode. In the prediction and interpolation modes, the subtractor 20 outputs the difference signal. The output of the subtractor 20 is then transformed at a transformation circuit (T) 21 and quantized by a quantizer (Q) 22. The most widely used transforms are the discrete cosine transform (DCT), the highly correlated transform, the HADAMARD transform and the HAAR transform. The quantized data is sent to a multiplexer (MUX) 15. At the same time, the quantized data is decompressed, i.e., dequantized and inverse transformed by a dequantizer (Q⁻¹) 23 and an inverse transformation circuit (T⁻¹) 24. At an adder 25, the predicted signals outputted from the switch 31 and sent through a line 1009 is added back to the decompressed data to produce a reconstructed picture. The reconstructed picture is stored in each of frame memories 27 and 28 as references. The motion vectors MV1 and MV2 are respectively sent to the frame memories 27 and 28 via lines 1002 and 1003 for retrieving the predicted blocks at the lines 2000 and 2001. In a variant which includes field motion compensation and interpolation modes, first and second fields of a block are retrieved responsive to the respective motion vectors.

The multiplexer 15 combines the quantized data outputted from the quantizer 22, the mode code sent from the mode selector 13 through a line 1006, the motion vector corresponding to the optimum mode indicated by the mode code and other side information after fixed or variable length coding. The combined bit stream at an output port 16 is then transmitted through an appropriate transmission line or stored in an appropriate storage medium depending on applications.

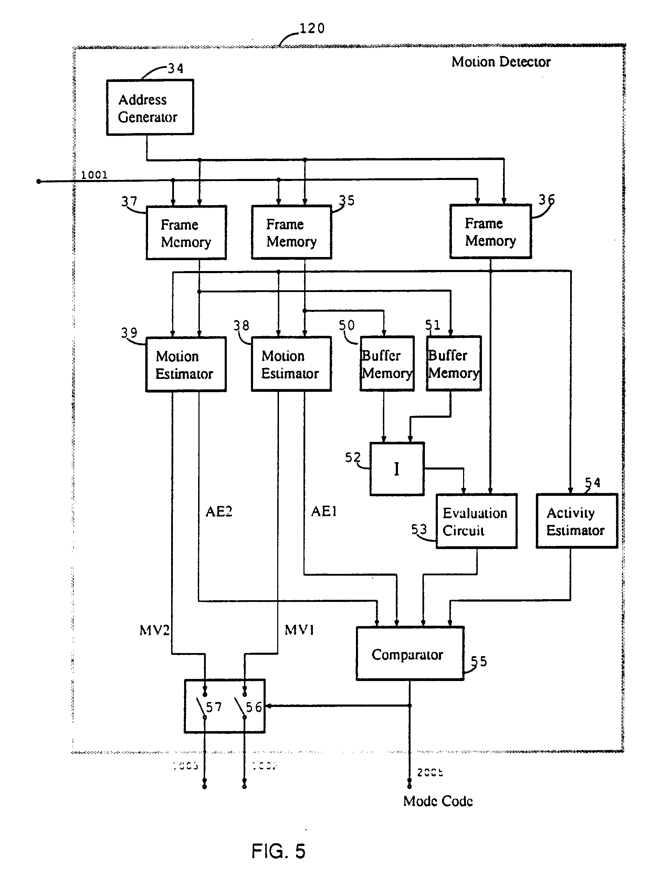

According to a variant of the present invention, the optimum mode may be determined at the motion detector. A preferred embodiment of such a variant is shown in FIG. 4. Basically, the encoding apparatus shown in FIG. 4 is similar to the apparatus shown in FIG. 1 except that the mode selector 13 is removed and the motion detector 12 is modified as a motion detector 120. The following description focuses on the motion detector 120 having a structure as shown in FIG. 5.

The motion detector 120 receives the video signals stored in and outputted from the frame memory 11 via the line 1001. The video signals are stored in frame memories 35, 36 and 37. In the present embodiment, the current picture is stored in the frame memory 36, and the past and future reference pictures, both original, are stored in frame memories 35 and 37, respectively. An address generator 34 generates the address for retrieving the blocks for motion estimation from the frame memories 35 - 37. Motion estimators 38 and 39 determine and output the optimum forward and backward motion vectors (MV1, MV2) and corresponding minimum forward and backward errors (AE1, AE2) in the same manner as described with reference to FIG. 2. The forward and backward reference blocks, corresponding to the optimum forward and backward motion vectors, are transferred to buffer memories 50 and 51. In a preferred manner, the buffer memories are overwritten by the reference blocks which give smaller errors than the previous ones. An interpolator (I) 52 produces an interpolated block by averaging the forward and backward reference blocks stored in and outputted from the buffer memories 50 and 51. An evaluation circuit 53 compares the interpolated block with the current block based on the same cost function used for the motion estimation. An activity estimator 54 estimates the activity of the current block by evaluating the AC energy or its square root. A comparator 55 compares the minimum forward error, minimum backward error, interpolation error and the activity of the current block and determines an optimum mode corresponding to a minimum value among all these values including the activity. The comparator 55 then generates a mode code corresponding to the optimum mode and outputs the mode code on a line 2005. In a preferred manner, the output of the motion vectors is controlled by switches 56 and 57 responsive to the mode code. For intra coded mode, both switches are disconnected. For interpolation mode, both switches are connected for sending out the forward and backward motion vectors on lines 1002 and 1003. Only one of the switches is connected for forward or backward prediction mode. In a variant, where the block is processed as two merged fields, additional modes corresponding to forward and backward field motion compensation and interpolation are possible.

## Claims

1. An encoding apparatus for motion compensated coding of
digital video signals, comprising:
storage means (11) for storing each input video frame and for dividing the input video frame into a plurality of blocks each containing a matrix of pixel data;
motion detection means (12, 35-39) coupled to said storage means for detecting a motion of a current block of a current frame by comparing said current block with each reference block in each of a plurality of reference frames based on a prescribed cost function for measuring a prediction error of said reference block, and for outputting for each of said reference frames an optimum motion vector corresponding to a best-matched reference block;
mode selection means (13,50-55) for determining an optimum encoding mode from a plurality of encoding modes for encoding said current block; and
encoding means ( 14) coupled to said storage means, said motion detection means and said mode selection means for compression coding said current block based on said optimum encoding mode and said optimum motion vector corresponding to said optimum encoding mode to obtain a coded data,
characterized in that said motion detection means (12,35,39) outputs for each of said reference frames said optimum motion vector and an optimum value of said cost function corresponding to the best-matched reference block, said mode selection means including activity estimation means (40, 54) for estimating the activity of said current block, and
that said mode selection means (13,50-55) is coupled to said storage means and said motion detection means for determining said optimum encoding mode from said plurality of encoding modes based on said optimum values of said cost function received from said motion detection means and an activity of said current block.

2. An apparatus according to claim 1, wherein said reference frames are past and future frames with respect to the current frame.

3. An apparatus according to claim 1 or 2, wherein said motion detection means (12,35-39) comprises:
first search means (35,38) for producing an optimum forward motion vector and an optimum value of cost function corresponding to a best-matched reference block from a past frame; and second search means (37, 39) for producing an optimum backward motion vector and an optimum value of cost function corresponding to a best-matched reference block from a future frame.

4. An apparatus according to claim 3, wherein said encoding means (14) comprises:
decompressing means (23,24,25) for decompressing said coded data;
means (27,28) for retrieving a past block of pixel data in response to said optimum forward motion vector from said past frame which has been compression coded and subsequently decompressed by said decompressing means and a future block of pixel data in response to said optimum backward motion vector from said future frame which has been compression coded and subsequently decompressed by said decompressing means; means (29) for averaging said past block and future block to produce an interpolated prediction block; and switch means (31) for selecting one or none of said past block, future block and interpolated prediction block based on said optimum encoding mode.

5. An apparatus according to claim 4, wherein said mode selection means (13) comprises: evaluation means (41) for evaluating said interpolated prediction block by comparing said interpolated prediction block with said current block based on said prescribed cost function; said activity estimation means (40) for estimating the activity of said current block; and comparator means (42) for comparing of said cost function received from said motion detection means, a value of said cost function received from said evaluation means and a value of the activity received from said activity estimation means, and for determining an optimum encoding mode which gives a least value among said values.

6. An apparatus according to claim 3 or 4, wherein said mode selection means (50-55) comprises:
interpolation means (50,51,52) for averaging said best matched reference block from said past frame and said best matched reference block from the future frame to produce an interpolated prediction block;
evaluation means (53) for evaluating said interpolated prediction block by comparing said interpolated prediction block with said current block based on said prescribed cost function; said activity estimation means (54) for estimating the activity of said current block; and comparator means (55) for comparing said optimum values of said cost function corresponding to said optimum forward motion vector and optimum backward motion vector, a value of said cost function received from said evaluation means and a value of said activity received from said activity estimation means, and for determining an optimum encoding mode which gives a least value among said values.

7. An apparatus according to any of claims 3 to 6, wherein said motion detection means ( 120) further comprises control means (56, 57) coupled to said first and second search means (38, 39) and said comparator (55) for controlling output of said forward and backward motion vectors based on said optimum encoding mode.

## Patentansprüche

1. Eine Codiervorrichtung zur bewegungskompensierten Codierung digitaler Videosignale, die umfaßt:
eine Speichereinrichtung (11) zur Speicherung von jedem Eingangsvideovollbild und zur Unterteilung des Videovollbilds in eine Mehrzahl Blöcke, von denen jeder eine Matrix von Pixeldaten enthält;
eine Bewegungserfassungseinrichtung (12, 35-39), die mit der genannten Speichereinrichtung zur Erfassung einer Bewegung eines gegenwärtigen Blocks eines gegenwärtigen Vollbilds gekoppelt ist, indem der genannte gegenwärtige Block mit jedem Bezugsblock in jedem einer Mehrzahl Bezugsvollbilder auf der Grundlage einer vorbestimmten Bewertungsfunktion zum Messen eines Voraussagefehlers des genannten Bezugsblocks verglichen wird, und zur Ausgabe eines optimalen Bewegungsvektors, der einem bestangepaßten Bezugsblock entspricht, für jedes der genannten Bezugsvollbilder;
eine Modusauswähleinrichtung (13, 50-55) zur Bestimmung eines optimalen Codiermodus aus einer Mehrzahl Codiermodi zur Codierung des genannten gegenwärtigen Blocks; und
eine Codiereinrichtung (14), die mit der genannten Speichereinrichtung, der genannten Bewegungserfassungseinrichtung und der genannten Modusauswähleinrichtung zur Komprimierungscodierung des genannten gegenwärtigen Blocks auf der Grundlage des genannten optimalen Codiermodus und des genannten optimalen Bewegungsvektors gekoppelt ist, der dem genannten optimalen Codiermodus entspricht, um codierte Daten zu erhalten,
**dadurch gekennzeichnet,** daß die genannte Bewegungserfassungseinrichtung (12, 35, 39) für jedes der genannten Bezugsvollbilder der genannten optimalen Bewegungsvektor und einen optimalen Wert der genannten Bewertungsfunktion entsprechend dem am besten angepaßten Bezugsblock ausgibt, wobei die genannte Modusauswähleinrichtung eine Aktivitätsschätzeinrichtung (40, 54) zum Schätzen der Aktivität des gegenwärtigen Blocks einschließt, und
daß die genannte Modusauswähleinrichtung (13, 50-55) mit der genannten Speichereinrichtung und der genannten Bewegungserfassungseinrichtung zur Bestimmung des genannten optimalen Codiermodus aus der genannten Mehrzahl Codiermodi auf der Grundlage der genannten optimalen Werte der genannten Bewertungsfunktion gekoppelt ist, die von der genannten Bewegungserfassungseinrichtung erhalten wird, und einer Aktivität des genannten gewärtigen Blocks.

2. Vorrichtung gemäß Anspruch 1, wobei die genannten Bezugsvollbilder ein vergangenes und ein zukünftigesr Vollbild in bezug auf das gegenwärtige Vollbild sind.

3. Eine Vorrichtung gemäß Anspruch 1 oder 2, wobei die genannte Bewegungserfassungseinrichtung (12, 35-39) umfaßt:
eine erste Sucheinrichtung (35, 38) zur Erzeugung eines optimalen Vorwärtsbewegungsvektors und eines optimalen Werts der Bewertungsfunktion entsprechend einem am besten angepaßten Bezugsblock von einem vergangenen Vollbild, und eine zweite Sucheinrichtung (37, 39) zur Erzeugung eines optimalen Rückwärtsbewegungsvektors und eines optimalen Werts der Bewertungsfunktion entsprechend einem bestangepaßten Bezugsblock, von einem zukünftigen Vollbild.

4. Eine Vorrichtung gemäß Anspruch 3, wobei die genannte Codiereinrichtung (14) umfaßt:
eine Dekomprimierungseinrichtung (23, 24, 25) zur Dekomprimierung der genannten codierten Daten;
eine Einrichtung (27, 28) zur Wiedergewinnung eines vergangenen Blocks Pixeldaten in Reaktion auf den genannten optimalen Vorwärtsbewegungsvektor von dem genannten vergangenen Vollbild, das komprimierungscodiert und nachfolgend durch die genannte Dekomprimierungseinrichtung dekomprimiert worden ist, und eines zukünftigen Blocks an Pixeldaten in Reaktion auf den genannten optimalen Rückwärtsbewegungsvektor von dem genannten zukünftigen Vollbild, das komprimierungscodiert und nachfolgend durch die genannte Dekomprimierungseinrichtung dekomprimiert worden ist; eine Einrichtung (29) zur Mittelung des genannten vergangenen Blocks und des zukünftigen Blocks, um einen interpolierten Voraussageblock zu erzeugen, und eine Schaltereinrichtung (31) zur Auswahl eines oder keines des genannten vergangenen Blocks, des zukünftigen Blocks und des interpolierten Voraussageblocks auf der Grundlage des genannten optimalen Codiermodus.

5. Eine Vorrichtung gemäß Anspruch 4, wobei die genannte Modusauswähleinrichtung (13) umfaßt eine Bestimmungseinrichtung (41) zur Bestimmung des genannten interpolierten Voraussageblocks, indem der genannte interpolierte Voraussageblock mit dem genannten gegenwärtigen Block auf der Grundlage der genannten vorbestimmten Bewertungsfunktion verglichen wird, die genannte Aktivitätsschätzeinrichtung (40) zum Schätzen der Aktivität des genannten gegenwärtigen Blocks und eine Vergleichereinrichtung (42) zum Vergleichen der genannten Bewertungsfunktion, die von der genannten Bewegungserfassungseinrichtung erhalten worden ist, eines Wertes der genannten Bewertungsfunktion, der von der genannten Bestimmungseinrichtung erhalten worden ist, und eines Wertes der Aktivität, der von der genannten Aktivitätsschätzeinrichtung erhalten worden ist, und zum Bestimmen eines optimalen Codiermodus, der den kleinsten Wert unter den genannten Werten gibt.

6. Eine Vorrichtung gemäß Anspruch 3 oder 4, wobei die genannte Modusauswähleinrichtung (50-55) umfaßt:
eine Interpolationseinrichtung (50, 51, 52) zur Mittelung des bestangepaßten Bezugsblocks von dem genannten vergangenen Vollbild und des bestangepaßten Bezugsblocks von dem zukünftigen Vollbild, um einen interpolierten Voraussageblock zu erzeugen;
eine Bestimmungseinrichtung (53) zur Bestimmung des genannten interpolierten Voraussageblocks, indem der genannte interpolierte Voraussageblock mit dem genannten gegenwärtigen Block auf der Grundlage der genannten vorbestimmten Bewertungsfunktion verglichen wird, die genannte Aktivitätsschätzeinrichtung (54) zum Schätzen der Aktivität des genannten gegenwärtigen Blocks und eine Vergleichereinrichtung (55) zum Vergleichen der genannten optimalen Werte der genannten Bewertungsfunktion, die dem genannten optimalen Vorwärtsbewegungsvektor und dem genannten optimalen Rückwärtsbewegungsvektor entsprechen, eines Wertes der genannten Bewertungsfunktion, der von der genannten Bestimmungseinrichtung erhalten worden ist, und eines Wertes der Aktivität, der von der genannten Aktivitätsschätzeinrichtung erhalten worden ist, und zum Bestimmen eines optimalen Codiermodus, der den kleinsten Wert unter den genannten Werten gibt.

7. Eine Vorrichtung gemäß irgendeinem der Ansprüche 3 bis 6, wobei die genannte Bewegungserfassungseinrichtung (120) des weiteren eine Steuereinrichtung (56, 57), die mit der genannten ersten und zweiten Sucheinrichtung (38, 39) und dem genannten Vergleicher (55) gekoppelt ist, um den Ausgang des genannten Vorwärts- und Rückwärtsbewegungsvektors auf der Grundlage des genannten optimalen Codiermodus zu steuern.

## Revendications

1. Appareil de codage pour le codage de mouvement compensé de
signaux vidéo numériques, comprenant :
un moyen de stockage (11) pour stocker chaque trame vidéo d'entrée et pour diviser la trame vidéo d'entrée en une pluralité de blocs contenant chacun une matrice de données de pixel ;
un moyen de détection de mouvement (12, 35 à 39) couplé audit moyen de stockage pour détecter un mouvement d'un bloc actuel d'une trame actuelle en comparant ledit bloc actuel avec chaque bloc de référence dans chacune d'une pluralité de trames de référence sur la base d'une fonction de coût prescrite pour mesurer une erreur de prédiction dudit bloc de référence, et pour fournir pour chacune desdites trames de référence un vecteur de mouvement optimum correspondant à un bloc de référence mieux adapté ;
un moyen de sélection de mode (13, 50 à 55) pour déterminer un mode de codage optimum à partir d'une pluralité de modes de codage pour coder ledit bloc actuel ; et
un moyen de codage (14) couplé audit moyen de stockage, ledit moyen de détection de mouvement et ledit moyen de sélection de mode pour coder en compression ledit bloc actuel sur la base dudit mode de codage optimum et ledit vecteur de mouvement optimum correspondant audit mode de codage optimum pour obtenir des données codées ;
caractérisé en ce que ledit moyen de détection de mouvement (12, 35, 39) fournit pour chacune desdites trames de référence ledit vecteur de mouvement optimum et une valeur optimum de ladite fonction de coût correspondant au bloc de référence le mieux adapté, ledit moyen de sélection de mode comprenant un moyen d'estimation d'activité (40, 54) pour estimer l'activité dudit bloc actuel, et
en ce que ledit moyen de sélection de mode (13, 50 à 55) est couplé audit moyen de stockage et audit moyen de détection de mouvement pour déterminer ledit mode de codage optimum à partir de ladite pluralité de modes de codage sur la base desdites valeurs optimum de ladite fonction de coût reçues dudit moyen de détection de mouvement et d'une activité dudit bloc actuel.

2. Appareil selon la revendication 1, dans lequel lesdites trames de référence sont des trames passée et future par rapport à la trame actuelle.

3. Appareil selon la revendication 1 ou 2, dans lequel ledit moyen de détection de mouvement (12, 35 à 39) comprend :
un premier moyen de recherche (35, 38) pour produire un vecteur de mouvement avant optimum et une valeur optimum de fonction de coût correspondant à un bloc de référence mieux adapté à partir d'une trame passée ; et un second moyen de recherche (37, 39) pour produire un vecteur de mouvement arrière optimum et une valeur optimum de fonction de coût correspondant à un bloc de référence mieux adapté à partir d'une trame future.

4. Appareil selon la revendication 3, dans lequel ledit moyen de codage (14) comprend :
un moyen de décompression (23, 24, 25) pour décompresser lesdites données codées ;
un moyen (27, 28) pour récupérer un bloc passé de données de pixels en réponse audit vecteur de mouvement avant optimum à partir de ladite trame passée qui a été codée en compression et décompresser par la suite par ledit moyen de décompression et un bloc futur de données de pixel en réponse audit vecteur de mouvement arrière optimum à partir de ladite trame future qui a été codée en compression et par la suite décompressée par ledit moyen de décompression ; un moyen (29) pour calculer la moyenne desdits bloc passé et bloc futur pour produire un bloc de prédiction interpolé ; et un moyen de commutation (31) pour sélectionner un ou aucun desdits bloc passé, bloc futur, bloc de prédiction interpolé sur la base dudit mode de codage optimum.

5. Appareil selon la revendication 4, dans lequel ledit moyen de sélection de mode (13) comprend un moyen d'évaluation (41) pour évaluer ledit bloc de prédiction interpolé en comparant ledit bloc de prédiction interpolé avec ledit bloc actuel sur la base de ladite fonction de coût prescrite ; ledit moyen d'estimation d'activité (40) pour estimer l'activité dudit bloc actuel ; et un moyen comparateur (42) pour comparer ladite fonction de coût reçu dudit moyen de détection de mouvement, une valeur de ladite fonction de coût reçue dudit moyen d'évaluation et une valeur de l'activité reçue dudit moyen d'estimation d'activité, et pour déterminer un mode de codage optimum qui donne la plus petite valeur parmi lesdites valeurs.

6. Appareil selon la revendication 3 ou 4, dans lequel ledit moyen de sélection de mode (50 à 55) comprend :
un moyen d'interpolation (50, 51, 52) pour calculer la moyenne dudit bloc de référence mieux adapté à partir de ladite trame passée et dudit bloc de référence mieux adapté à partir de la trame future pour produire un bloc de prédiction interpolé ;
un moyen d'évaluation (53) pour évaluer ledit bloc de prédiction interpolé en comparant ledit bloc de prédiction interpolé avec ledit bloc actuel sur la base de ladite fonction de coût prescrite ; ledit moyen d'estimation d'activité (54) pour estimer l'activité dudit bloc actuel ; et un moyen comparateur (55) pour comparer lesdites valeurs optimum de ladite fonction de coût correspondant audit vecteur de mouvement avant optimum et au vecteur de mouvement arrière optimum, une valeur de ladite fonction de coût reçue à partir dudit moyen d'évaluation et une valeur de ladite activité reçue à partir dudit moyen d'estimation d'activité, et pour déterminer un mode de codage optimum qui donne la plus petite valeur parmi lesdites valeurs.

7. Appareil selon l'une quelconque des revendications 3 à 6, dans lequel ledit moyen de détection de mouvement (120) comprend en outre un moyen de commande (56, 57) couplé auxdits premier et second moyen de recherche (38, 39) et audit comparateur (55) pour commander la sortie desdits vecteurs de mouvement avant et arrière sur la base dudit mode de codage optimum.
